# EUROPEAN PATENT APPLICATION

(11) **EP 2 584 434 A1**
(43) Date of publication of application: **24.04.2013**
(21) Application number: 11795549.2
(22) Date of filing: 30.05.2011
(51) Int. Cl.: G06F 3/023, G06F 3/041, G06F 3/048, H03M 11/04

(54) **INFORMATION PROCESSING TERMINAL AND METHOD FOR CONTROLLING OPERATION THEREOF**

(30) Priority: 17.06.2010 JP 2010138512
(71) Applicant: NEC Corporation, Tokyo 108-8001 (JP)
(72) Inventor: ONISHI, Shinji, Tokyo 108-8001 (JP); KOCHI, Taketo, Tokyo 108-8001 (JP); KAJIWARA, Kei, Sapporo-shi Hokkaido 060-0061 (JP)
(74) Representative: Vossius & Partner
(86) International application number: PCT/JP2011/062378
(87) International publication number: WO 2011/158641

(57) **Abstract**

An information processing terminal includes a display and input section and a control means. The display and input section displays an image on a display and accepts an operation. The control means arranges a plurality of items included in a first item group in a string, displays at least part of the string in a predetermined fan-shaped region located at a lower portion of the display, scrolls the string corresponding to an operation for the display, and changes items on the display.

## Description

### TECHNICAL FIELD

The present invention relates to an information processing terminal including a touch-panel type display.

### BACKGROUND ART

In recent years, portable information terminals that are hand-held and that are not at a fixed location such as a desk have become common. Some of these information processing terminals use a touch-panel type display in which an input device and a display device are integrated. Since they can provide a large display compared with their device size, both small device size and large display size can coexist. Thus, touch-panel type displays are suitable for portable information processing terminals.

Generally, information processing terminals include user interfaces that not only have a menu function allowing the user to select his or her desired item from a menu, but also a character input function (refer to Patent Literatures 1 to 5). The character input functions described in Patent Literatures 1 to 5 are expected to perform an input operation for the information processing terminal while the user is holding it. Thus, the user can input characters to the information processing terminal without needing to release his or her hand from it. For example, the user can create a message for an electronic mail service or Twitter (registered trademark) by operating a PDA (Personal Digital Assistant) or a portable telephone with his or her hand that is holding it.

In the character input method described in Patent Literature 1, a plurality of characters that represent each column of the Japanese syllabary (characters of row "A") are displayed in a string on one side of a display. When the user selects any one character of row "A," a string of characters of the column corresponding to the selected character of row "A" is displayed in parallel with the string of characters of row "A." When the user selects any character from the column characters, the selected character is input.

Although the device described in Patent Literature 2 is not a portable type device, characters of row "A" are displayed in parallel with one side of the display. When the user selects any character of row "A," a string of column characters corresponding to the selected character of row "A" is displayed perpendicular to the string of the character of row "A." When the user selects any one of the column characters, the selected character is input.

In the character input method described in Patent Literature 3, operation buttons that are software keys are arranged in an arc shape at the lateral portion of a display. The user inputs characters by touching the operation buttons with the thumb of the hand that is holding the housing of the device.

In the character input method described in Patent Literature 4, a plurality of characters are displayed in a circular shape. When the user touches a character with his or her finger, the character is displayed at the input position. When the user releases his or her finger, the input character is confirmed.

In the character input method described Patent Literature 5, hardware keys that are QWERTY keys are arranged on both sides of a display. The user can press character keys with both his or her thumbs of the hands that are holding the information processing terminal.

### RELATED ART LITERATURE

### PATENT LITERATURE

Patent Literature 1: JP2006-148536A, Publication
Patent Literature 2: Japanese Patent No. 3715593, Publication
Patent Literature 3: JP2009-158989A, Publication
Patent Literature 4: JP2006-350409A, Publication
Patent Literature 5: JP2000-267787A, Publication

### SUMMARY OF THE INVENTION

### PROBLEM TO BE SOLVED BY THE INVENTION

In the related art described in Patent Literatures 1 and 2, all characters of row "A" are displayed. When any character of row "A" is selected, all column characters corresponding to the selected character are displayed. Thus, the related art described in Patent Literatures 1 and 2 has a drawback in which the ratio of keys on the screen to the rest of the screen becomes large. Although such a problem may be solved by decreasing the ratio of the keys, the user would have difficulty inputting data.

Moreover, in the related art described in Patent Literatures 1 and 2, all characters of a character string are displayed at fixed positions in parallel with one side of the display. Thus, when the user inputs characters while he or she is holding the housing of the information processing terminal, he or she needs to largely move his or her thumb or hand that is holding the enclosure of the information processing terminal.

In the related art described in Patent Literature 3, keys are arranged at fixed positions in a range that the user can touch the keys with his or her thumb while he or she is holding the housing of the information processing terminal. Thus, the information processing terminal according to Patent Literature 3 has a drawback in which the number of keys that can be defined is small. If the number of keys were increased, the ratio of keys on the screen to the rest of the screen would become large.

The related art described in Patent Literature 4 that displays all keys that correspond to input candidates has a drawback in which the ratio of keys on the screen to the rest of the screen becomes large. Even if the ratio of keys on the screen to the rest of the screen is decreased, the user would still find it difficult to input data become the portion of the key that corresponds to each character would become small..

Since the device described in Patent Literature 5 displays all QWERT keys, it has a drawback in which the ratio of keys on the screen to the rest of the screen becomes large. If the ratio of keys on the screen to the rest of the screen were decreased, since the size of each key would be decreased, the user would find it difficulty to input data.

An object of the present invention is to provide software keys that allow a display region on a display to widen and the user to easily input data.

### MEANS THAT SOLVE THE PROBLEM

To accomplish the foregoing object, an Information processing terminal according to an aspect of the present invention includes:
a display and input section that displays an image on a display and accepts an operation; and
control means that arranges a plurality of items included in a first item group in a string, displays at least part of the string in a predetermined fan-shaped region located at a lower portion of said display, scrolls said string corresponding to an operation for said display, and changes items on said display.

An operation control method according to an aspect of the present invention is an operation control method for an information processing terminal having a display that displays an image, including:
arranging a plurality of items included in a first item group in a string and displaying part of the string in a predetermined fan-shaped region at a lower portion of said display; and
scrolling said string corresponding to a user's operation and changing items displayed on said display.

### BRIEF DESCRIPTION OF DRAWINGS

Fig. 1 is a front view showing an information processing terminal according to a first exemplary embodiment.
Fig. 2 is a functional block diagram showing the information processing terminal according to the first exemplary embodiment.
Fig. 3 is a flow chart showing an operation performed when a column is selected on information processing terminal 10 according to the first exemplary embodiment.
Fig. 4A is a schematic diagram showing an operation performed when a column is selected on information processing terminal 10 according to the first exemplary embodiment.
Fig. 4B is a schematic diagram showing an operation performed when a column is selected on information processing terminal 10 according to the first exemplary embodiment.
Fig. 4C is a schematic diagram showing an operation performed when a column is selected on information processing terminal 10 according to the first exemplary embodiment.
Fig. 4D is a schematic diagram showing an operation performed when a column is selected on information processing terminal 10 according to the first exemplary embodiment.
Fig. 4E is a schematic diagram showing an operation performed when a column is selected on information processing terminal 10 according to the first exemplary embodiment.
Fig. 5 is a flow chart showing an operation performed when a character is selected on information processing terminal 10 according to the first exemplary embodiment.
Fig. 6A is a schematic diagram showing an operation performed when a character is selected on information processing terminal 10 according to the first exemplary embodiment.
Fig. 6B is a schematic diagram showing an operation performed when a character is selected on information processing terminal 10 according to the first exemplary embodiment.
Fig. 6C is a schematic diagram showing an operation performed when a character is selected on information processing terminal 10 according to the first exemplary embodiment.
Fig. 6D is a schematic diagram showing an operation performed when a character is selected on information processing terminal 10 according to the first exemplary embodiment.
Fig. 7 is a schematic diagram showing that information processing terminal 10 according to the first exemplary embodiment displays conversion candidates.
Fig. 8 is a schematic diagram showing an example of an arrangement of special keys according to the first exemplary embodiment.
Fig. 9A is a schematic diagram showing an example of a display image on information processing terminal 10 according to a first modification of the first exemplary embodiment in which column character string 24 is not scrolled.
Fig. 9B is a schematic diagram showing an example of a display image on information processing terminal 10 according to the first modification of the first exemplary embodiment in which column character string 24 is not scrolled.
Fig. 10 is a flow chart showing an operation performed when a character is selected on information processing terminal 10 according to the first modification of the first exemplary embodiment in which column character string 24 is not scrolled.
Fig. 11 is a schematic diagram showing another example of a display image on information processing terminal 10 according to the first modification of the first exemplary embodiment in which column character string 24 is not scrolled.
Fig. 12A is a schematic diagram showing an example of a display image on information processing terminal 10 according to a second modification of the first exemplary embodiment.
Fig. 12B is a schematic diagram showing an example of a display image on information processing terminal 10 according to the second modification of the first exemplary embodiment.
Fig. 13 is a flow chart showing a column selection operation and a character selection operation on information processing terminal 10 according to the second modification of the first exemplary embodiment.
Fig. 14 is a schematic diagram showing an example of a display image on display 13 according to a third modification.
Fig. 15 is a schematic diagram showing an example of an arrangement of special keys according to a fourth modification.
Fig. 16 is a schematic diagram showing changes of a display image according to a fifth modification.
Fig. 17 is a schematic diagram showing an example of a display image on information processing terminal 10 according to a second exemplary embodiment.
Fig. 18 is a schematic diagram showing an example of a display image on information processing terminal 10 according to a third exemplary embodiment.
Fig. 19 is a schematic diagram showing an example of a display image on information processing terminal 10 according to a fourth exemplary embodiment.
Fig. 20 is a schematic diagram showing an example of a display image on information processing terminal 10 according to a fifth exemplary embodiment.
Fig. 21 is a schematic diagram showing an example of a display image on information processing terminal 10 according to a sixth exemplary embodiment.
Fig. 22A is a schematic diagram showing an example of a display image on information processing terminal 10 according to a seventh exemplary embodiment.
Fig. 22B is a schematic diagram showing an example of a display image on information processing terminal 10 according to the seventh exemplary embodiment.
Fig. 22C is a schematic diagram showing an example of a display image on information processing terminal 10 according to the seventh exemplary embodiment.

### BEST MODES THAT CARRY OUT THE INVENTION

Next, with reference to the accompanying drawings, embodiments of the present invention will be described.

### (First Exemplary Embodiment)

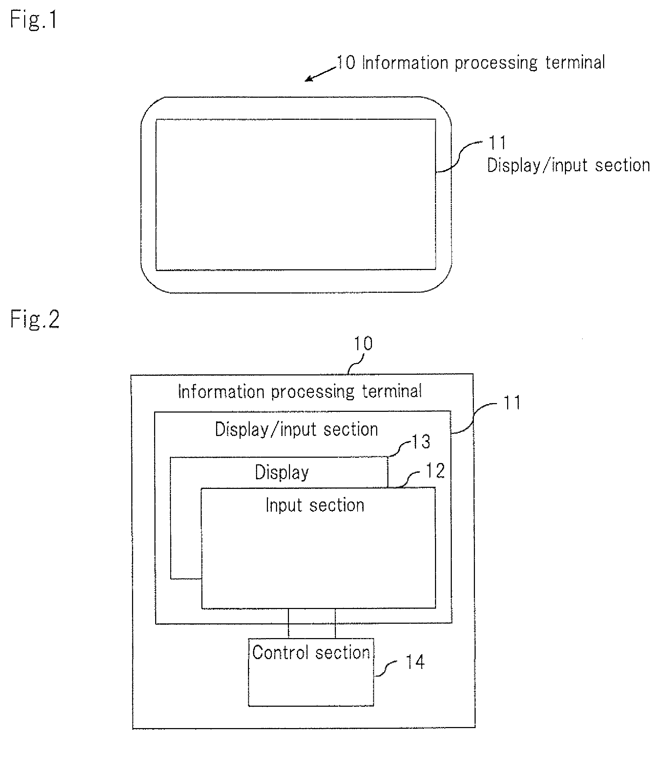

Fig. 1 is a front view showing an information processing terminal according to a first exemplary embodiment of the present invention. Information processing terminal 10 according to this embodiment is, for example, a portable information device having a communication function. Normally, the user uses information processing terminal 10 by holding it with his or her hand when user is not at a fixed location, such as a desk.

In information processing terminal 10, a display means and an input means are integrated. When the user operates information processing terminal 10, he or she touches the screen thereof. Information processing terminal 10 activates an application corresponding to an icon that the user touches and displays a screen showing software switches and so forth. Information processing terminal 10 executes an application process in which a touch operation is performed by touching a software switch.

Information processing terminal 10 provides a character input function that inputs characters of hira-kana, kata-kana, kanji, and alphanumeric characters. The user can create a mail message using a mailer application. Moreover, the user can create a message that is submitted to the Twitter (registered trademark) service using a browser application. When the user submits a message to Twitter, it is assumed that he or she refers to past submitted messages. In this case, it is preferred that the user's fingers that operate information processing terminal 10 not be disturbed while browsing past submitted massages while his or her hands are on the keys displayed on the screen.

Fig. 2 is a functional block diagram showing the information processing terminal according to the first exemplary embodiment. Referring to Fig. 2, information processing terminal 10 includes display and input section 11 and control section 14.

Display and input section 11 is a touch-panel type display in which touch-type input section 12 and display 13 are integrated. When the user touches input section 12, it notifies control section 14 of touch position information that represents the position that the user touched. Display 13 displays an image corresponding to a command received from control section 14 or changes the image.

Control section 14 executes an application based on the touch position information received from input section 12 and displays an application screen on display 13. For example, when the cursor is moved to a character input region where the user can input characters on the screen corresponding to the touch position information, control section 14 enters a character input state in which the user can input characters.

Although the user can input various types of characters such as hira-kana, kata-kana, kanji, alphanumeric characters, and so forth in the character input state, it is assumed that characters of hira-kana will be input. In addition, it is assumed that individual columns of the Japanese syllabary are represented by characters of row "A." Characters that represent the individual columns are referred to as "representative characters." "A," "Ka," "Sa," "Ta," "Na," ... are representative characters. On the other hand, characters included in one column are referred to as "column characters." For example, "Ka," "Ki," "Ku," "Ke," and "Ko" are column characters of column "Ka."

Control section 14 has categorized all the representative characters as a first group and the column characters of each column as a second group. Thus, each column has characters categorized as the second group. The representative characters that are categorized as the first group are arranged in order. Likewise, column characters that are categorized as the second group are also arranged in order. In this example, characters are arranged in order of the Japanese syllabary table. Specifically, the representative characters are arranged in order of "A," "Ka," "Sa," "Ta," "Na," and so forth. The column characters of column "Ka" are arranged in order of "Ka," "Ki," "Ku," "Ke," and "Ko."

In the character input state, control section 14 displays part of a predetermined display range of the representative characters that are categorized as the first group and that are arranged in order in a fan-shaped region at a lower portion of display 13. Although the fan-shaped region is not shown in the drawing, the region is assumed to be a region in which the thumb of the hand that is holding information processing terminal 10 reaches. The size of the fan-shaped region is not specified, but arbitrary provided that the thumb of an ordinary human that uses information processing terminal 10 reaches the region. Alternatively, the size of the fan-shaped region may be specified such that when representative characters and column characters are displayed on display 13, the user can browse the rest of the screen and input characters with appropriate operability. The display range may be specified in a suitable region based on the size of the fan-shaped region and the size of each character. If the size of the fan-shaped region and the size of representative characters restrict the number of representative characters to six characters, the display range needs to have a space for six characters.

When control section 14 detects a flick operation for part of the display range of the representative character string on display 13 based on touch position information, control section 14 scrolls the representative character string in the display range on the foregoing line corresponding to the flick operation so as to successively change the representative characters on display 13.

When control section 14 detects a tap operation for any character of the representative characters in the display range based on touch position information, control section 14 displays column characters of a column represented by a representative character designated by the tap operation. In this example, although all column characters of the column are displayed, part of the column characters may be displayed.

When control section 14 detects a flick operation for the region of column characters, control section 14 scrolls the column character string corresponding to the flick operation. When control section 14 detects a tap operation for any character of column characters, control section 14 inputs the taped column character to the character input region.

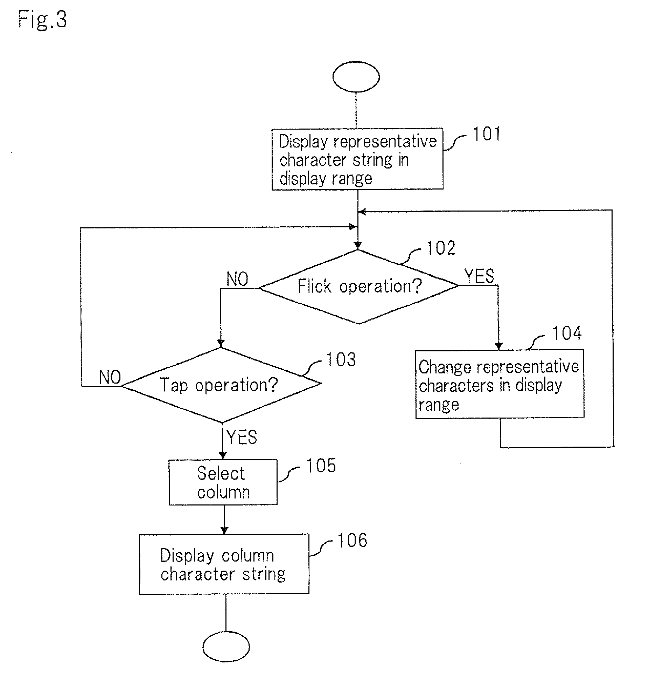

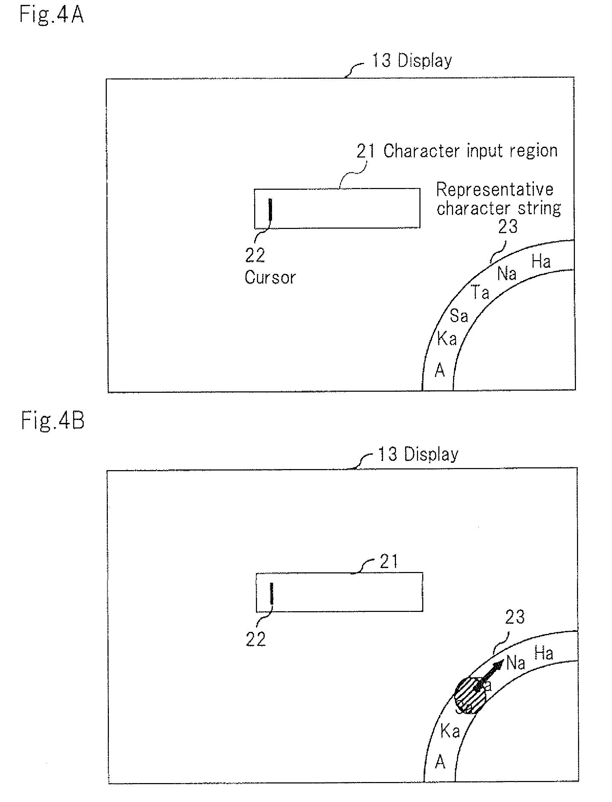

Fig. 3 is a flow chart showing an operation performed when a column is selected on information processing terminal 10 according to the first exemplary embodiment. Figs. 4A to 4E are schematic diagrams showing an operation performed when a column is selected on information processing terminal 10 according to the first exemplary embodiment.

Referring to Fig. 3, when information processing terminal 10 enters the character input state, information processing terminal 10 displays representative characters in the display range (at step 101). For example, in the character input state where cursor 22 is present in character input region 21, part of representative character string 23 (display range) is displayed on an arc that intersects with the lower side and right side at a lower portion of display 13.

Thereafter, information processing terminal 10 monitors the occurrences of a flick operation and a tap operation (at steps 102 and 103).

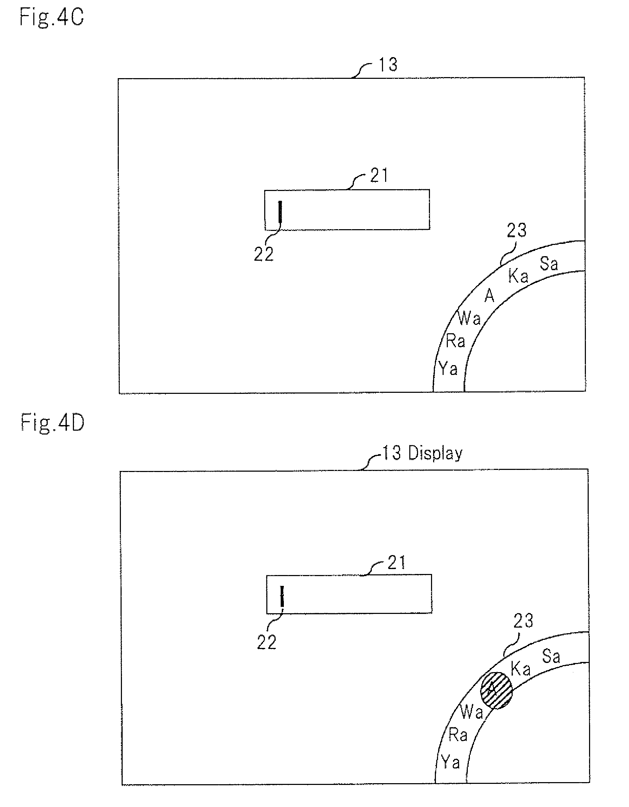

When the flick operation is performed for the region where representative character string 23 is displayed, information processing terminal 10 successively changes characters of representative character string 23 in the display range corresponding to the flick operation (at step 104). For example, when a flick operation is performed as shown in Fig. 4B, representative characters in the display range change as shown in Fig. 4C. In the drawing, the flick operation is represented by a hatched ellipse and an arrow.

When a tap operation is performed for any character of representative character string 23, information processing terminal 10 selects a column corresponding to a representative character designated by the tap operation (at step 105) and displays a string of the column characters of the column on an inner arc that is concentric to the arc of the representative character string (at step 106). For example, when a tap operation is performed for "A" of representative character string 23 as shown in Fig. 4D, "A," "I," "U," "E," and "O" of column character string 24 of column "A" are displayed on the inner arc. In the drawing, the tap operation is represented by a hatched eclipse.

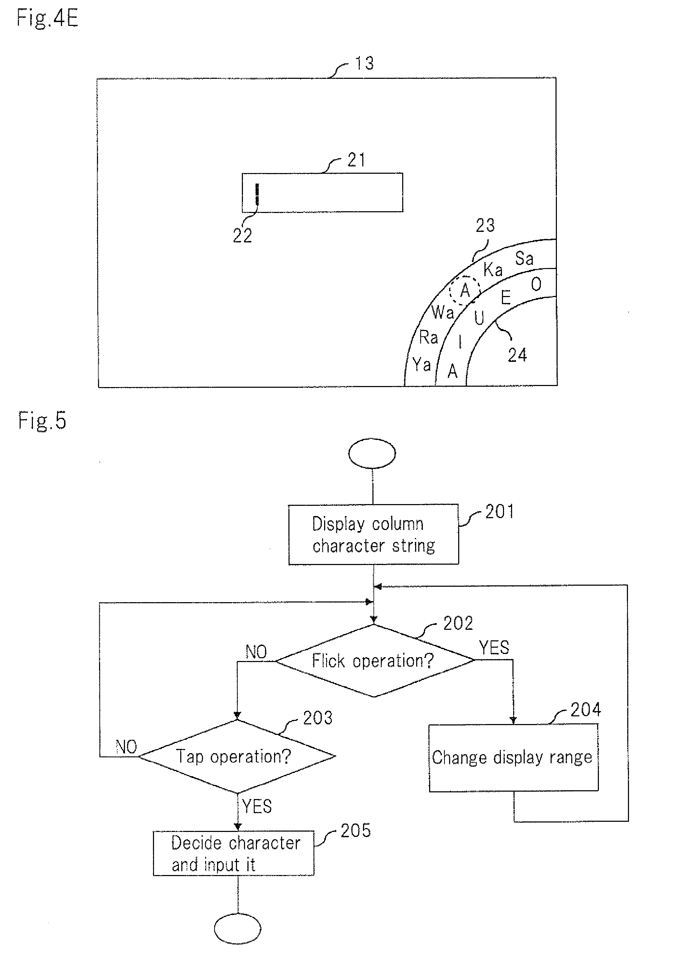

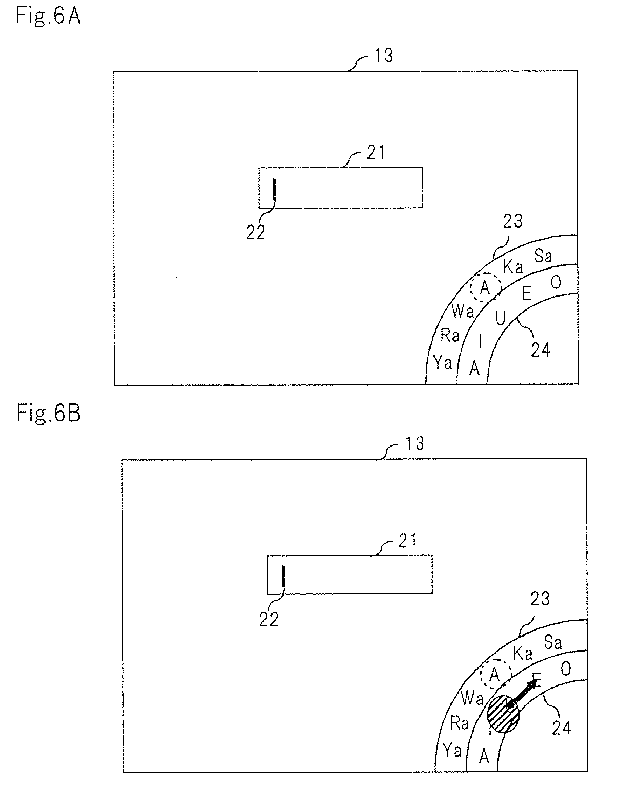

Fig. 5 is a flow chart showing an operation performed when a character is selected on information processing terminal 10 according to the first exemplary embodiment. Figs. 6A to 6D are schematic diagrams showing an operation performed when a character is selected on information processing terminal 10 according to the first exemplary embodiment.

Referring to Fig. 5, while information processing terminal 10 displays column character string 24 on display 13 (at step 201), information processing terminal 10 monitors the occurrences of a flick operation and a tap operation (at steps 202 and 203). For example, as shown in Fig. 6A, while information processing terminal 10 displays "A," "I," "U," "E," and "O" of column character string 24 of column "A" information processing terminal 10 monitors the occurrences of a flick operation and a tap operation.

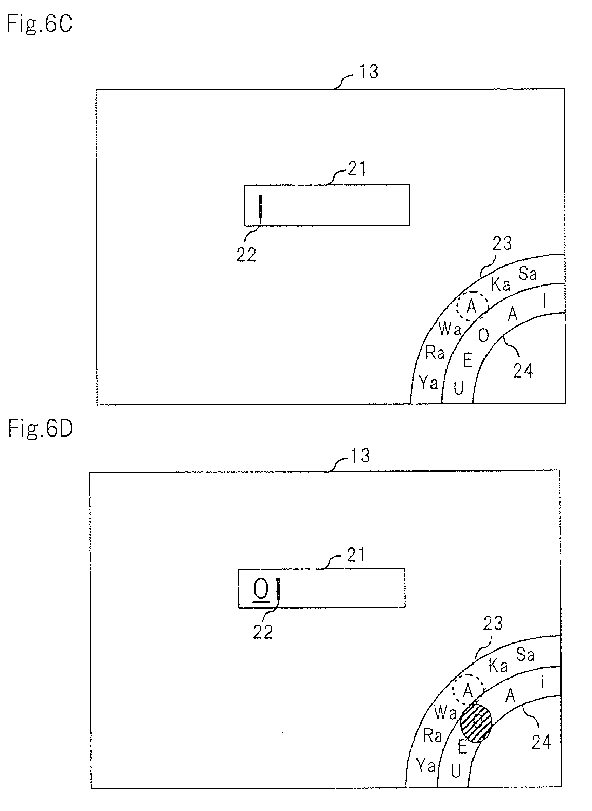

When a flick operation is performed for a region where column character string 24 is displayed, information processing terminal 10 successively changes characters of column character string 24 in the display range corresponding to the flick operation (at step 204). When a flick operation is performed as shown in Fig. 6B, column characters in the display range change as shown in Fig. 6C.

When a tap operation is performed for any character of column character string 24, information processing terminal 10 decides a column character designated by the tap operation and inputs the decided column character to character input region 21 (at step 205). For example, when a tap operation is performed for "O" of column character string 24 as shown in Fig. 6D, "O" is input to character input region 21.

As described above, according to a first aspect of this embodiment, information processing terminal 10 arranges a plurality of items (in this case, characters) in a string, displays part of the string in a fan-shaped region at a lower portion of display 13, scrolls the string corresponding to the operation, and changes items (characters) on display 13. Thus, Information processing terminal 10 can widen the display region on display 13 and provide software keys that are easy-to-use to input data and that ensure a touch operation for each character. The lower limit of the natural movable angle range of the thumb of the hand that holds information processing terminal 10 is up to a direction in parallel with the lower side. The range that the thumb reaches is a fan shape. Thus, according to this embodiment, a character string is displayed in the fan-shaped region at the lower portion of display 13 such that the movable angle range of the thumb is used for the touch operation and the software keys and thumb do not disturb the visibility. According to the first aspect of this embodiment, a structure that scrolls a string corresponding to an operation is used so as to ensure operability with the limited fan-shaped region.

According to a second aspect of this embodiment, information processing terminal 10 arranges a plurality of items included in a first group in a string, displays at least part of the string thereof in a fan-shaped region at a lower portion of display 13, and displays at least part of items included in a second item group corresponding to the selected item of the first item group in the fan-shaped region. Thus, information processing terminal 10 can widen the display region on display 13 and provide software keys that are easy-to-use to input data and that ensure a touch operation for each character. As described above, according to this embodiment, a character string is displayed in the fan-shaped region that is close to the lateral side of the housing of information processing terminal 10 that the user is holding at the lower portion of display 13 such that the movable angle range of the thumb does not disturb the screen as much as possible. According to the second aspect of this embodiment, a hierarchical structure in which a character is selected from the first group and then a character is selected from the second group is used so as to ensure operability with the limited fan-shaped region.

The foregoing first aspect and second aspect can be independently used. Using any one of the first and second aspects allows the display range on display 13 to widen and provide software keys that are easy-to-use to input data and that ensure a touch operation for each character.

In addition, the upper limit of the natural movable angle range of the thumb of the right hand (or left hand) that laterally holds information processing terminal 10 is up to a direction in parallel with the right side when the right hand holds information processing terminal 10 (or with the left side when the left hand holds it). Thus, according to this embodiment, a character string is displayed on a line that intersects the lower side and the right side (or left side) so as to effectively use the movable angle range of the thumb for a touch operation and so as to prevent the software keys and the thumb from disturbing the visibility of the display image.

Since the natural locus of the thumb of the hand that laterally holds information processing terminal 10 can be approximated based on a straight line or an arc that connects a point that intersects the lower side and a point that intersects a lateral side (right side or left side), according to this embodiment, a character string is arranged on a straight line or an arc.

It is assumed that when the user inputs a character af hira-kana to the character input region, information processing terminal 10 assists him or her in such a manner that information processing terminal 10 displays words such as conversion candidates. For example, when the user inputs one or a plurality of characters of hira-kana to character input region 21 before their conversion is not confirmed, information processing terminal 10 displays a string of words that begin with the character of hira-kana that the user entered in the past as conversion candidates on an arc that is concentric with the arcs of the string of the representative characters and the string of column characters. When the user taps any conversion candidate, Information processing terminal 10 displays the tapped conversion candidate in character input region 21 and confirms the conversion.

Alternatively, information processing terminal 10 may obtain the priority of each conversion candidate from the past input history and display conversion candidates based on the priorities. For example, information processing terminal 10 may arrange conversion candidates in order of the priorities and display the arranged conversion candidates. Further alternatively, information processing terminal 10 may display the conversion candidates at positions that the user can more easily touch based on their priorities. Further alternatively, information processing terminal 10 may display conversion candidates in increased sizes based on their priorities. Further alternatively, information processing terminal 10 may assign higher priorities to later conversion candidates. Further alternative, information processing terminal 10 may assign high priorities to conversion candidates based on their past input frequencies.

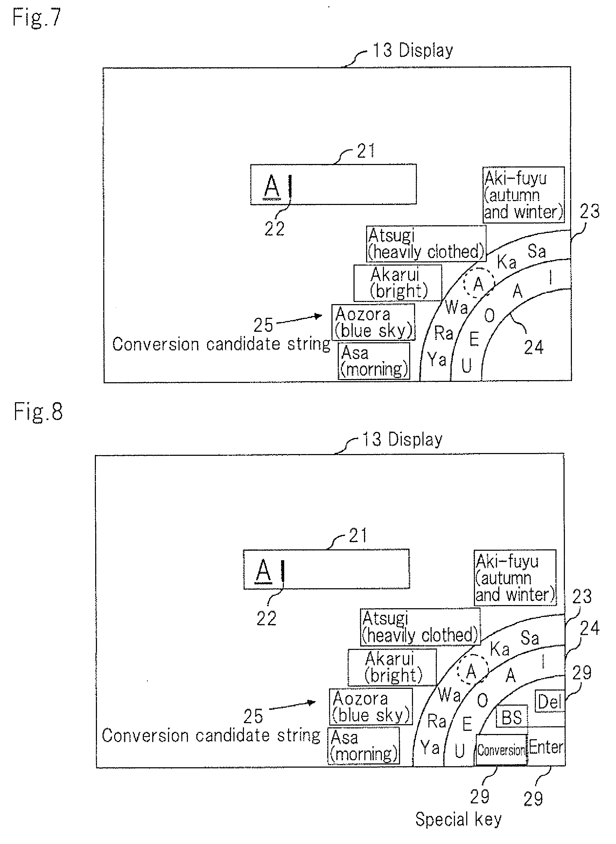

Fig. 7 is a schematic diagram showing that information processing terminal 10 according to the first exemplary embodiment displays conversion candidates. Referring to Fig. 7, since "A" has been input to character input region 21, information processing terminal 10 displays words that start with "A" and that were input as conversion candidate string 25. In the example shown in Fig. 7, information processing terminal 10 displays individual conversion candidates in sizes based on their priorities.

According to this embodiment, when the user taps any conversion candidate, information processing terminal 10 inputs the tapped conversion candidate to character input region 21. It should be appreciated that the present invention is not limited to such a structure. Alternatively, when the user flicks any conversion candidate of conversion candidate string 25 to character input region 21, information processing terminal 10 may input the conversion candidate to character input region 21. In this case, if a plurality of applications are being simultaneously executed and each of them has character input region 21, the user can select character input region 21 of the desired application and input characters to character input region 21.

According to this embodiment, information processing terminal 10 has one display 13. Alternatively, this embodiment may be applied to the case in which individual applications are executed on individual displays of a two-display type information processing terminal having two touch-panel type displays. In this case, when the user wants to input a conversion candidate of conversion candidate string 25 on one display to an application on the other display, he or she can flick the conversion candidate to character input region 21 on the other display.

Such a two-display type information processing terminal may execute a plurality of applications on one display. Alternatively, the terminal may execute a plurality of applications one each of two displays. In this case, when the user flicks a conversion candidate to character input region 21 of his or her desired application or to a display that displays his or her desired character input region 21, the terminal may input the conversion candidate to his or her desired character input region 21.

When the user taps a conversion candidate, information processing terminal 10 may display icons that represent a plurality of applications around the conversion candidate. When the user flicks the conversion candidate to any one of the icons, information processing terminal 10 may input the characters of the conversion candidate to character input region 21 of the application corresponding to the icon. Alternatively, when the user taps any one of a plurality of icons that are displayed around a conversion candidate, information processing terminal 10 may input the characters of the conversion candidate to character input region 21 of the application corresponding to the icon. In this case, if a plurality of applications are being simultaneously executed, even if some applications do not have character input region 21, the user can select character input region 21 of his or her desired application and input characters thereto.

Further alternatively, when the user taps a conversion candidate, icons that are displayed around the tapped conversion candidate may include icons that represent an inactive application or an application that is not being executed. In this case, if the user flicks a conversion candidate to an icon that represents an inactive application, information processing terminal 10 may activate the application and input the characters of the conversion candidate to character input region 21. If the user flicks a conversion candidate to an icon that represents an application that is not being executed, information processing terminal 10 may activate the application and input the characters of the conversion candidate to character input region 21. For example, if the user flicks a conversion candidate of a word whose meaning he or she wants to know to an icon that represents a dictionary application, information processing terminal 10 may activate the dictionary application and display the meaning of the word.

In the example shown in Fig. 7, conversion candidate string 25 is displayed on an arc that is concentric to and located outside the arcs of representative character string 23 and column character string 24. It should be appreciated that the present invention is not limited to such a structure. Alternatively, conversion candidate string 25 may be displayed on an arc that is concentric to and located inside the arcs of representative character string 23 and column character string 24. Further alternatively, in consideration of the sequence of operations, representative character string 23, column character string 24, and conversion candidate string 25 may be successively arranged from the inside to the outside or vice versa. As a result, operability may be improved and characters may be quickly input.

According to this embodiment, as shown in Figs. 6A to 6D, for example, a column character string is displayed inside representative character string 23. It should be appreciated that the present invention is not limited to such a structure. Alternatively, column character string 24 may be displayed outside representative character string 23. In this case, when a representative character is selected, since the thumb does not hide columns characters, the user can easily select a column character.

According to this embodiment, since the arrangement and operation method for special keys such as conversion key, enter key, delete key, backspace key, and so forth that are used to input characters are not specified, their description and illustration have not been mentioned so far. Fig. 8 is a schematic diagram showing an example of the arrangement of special keys according to the first exemplary embodiment. Referring to Fig. 8, special keys 29 are arranged inside column character string 24. As a result, the user can convert an input character, select a conversion candidate, confirm the conversion, delete an input character, move the cursor back, and so forth by performing a touch operation using his or her thumb in its moving range.

According to this embodiment, special keys 29 shown in Fig. 8 are arranged at fixed positions and they are not moved by a flick operation and a drag operation. In addition, since special keys 29 are arranged to be in contract with or in the neighborhood of an outer edge of display 13, the user can sense their positions from the outer edge of display 13 with his or her hand and fingers. Thus, when the user gets accustomed to special keys 29, he or she can blind touch them.

According to this embodiment, the position at which the character input region is displayed is arbitrary. Thus, an applicable application and the user can freely designate the character input region. In the example shown in Fig. 7, character input region 21 is displayed in the neighborhood of the center of display 13. In this case, when the user deletes part of characters that have been input to character input region 21 or inserts a character at his or her desired position, he or she needs to touch character input region 21 so as to move the cursor thereto. To improve the operability in such a situation, an auxiliary character input region may be located in the neighborhood of representative character string 23 or a column character string. In this case, information processing terminal 10 may display the same contents as character input region 21 in the auxiliary character input region and accept a touch operation for the auxiliary character input region in the same manner as that for the character input region. The user can touch the auxiliary character input region so as to move the cursor thereto.

According to this embodiment, Information processing terminal 10 includes touch-panel type display 13. It should be appreciated that the present invention is not limited to such a structure. Alternatively, the input means and the display means may be independent from each other. For example, the present invention may be applied to information processing terminal 10 that includes a pointing device that operates the cursor or pointer as the input means such that the user clicks or drags his or her desired position on the screen of the display.

According to this embodiment, representative character string 23 is cyclically displayed. When representative character string 23 is flicked as shown in Fig. 4B, "A" is preceded by "Wa" as shown in Fig. 4C. It should be appreciated that the present invention is not limited to such a structure. In other words, representative character string 23, column character string 24, and/or conversion candidate string 25 may be cyclically displayed. Alternatively, at least one of representative character string 23, column character string 24, and conversion candidate string 25 may be cyclically displayed. If a character string includes many characters, it may be cyclically displayed such that when the user flicks it in the close direction, his or her desired character is displayed. When the user wants to display a character that is present at the end of a character string that is not cyclically displayed, he or she may largely flick the character string.

According to this embodiment, the user may flick a character string so as to scroll it. However, the present invention is not limited to such a structure. Alternatively, the user may drag a character string on information processing terminal 10 so as to scroll it. Further alternatively, the user may flick or drag a character string so as to scroll it.

According to this embodiment, information processing terminal 10 displays a character string on a line that intersects the lower side of display 13. However, it should be appreciated that the present invention does not specify the detection method for the lower side. For example, information processing terminal 10 may detect the lower side from the upper and lower directions of an image on display 13. Since information processing terminal 10 includes a sensor using a gyroscope or the like, information processing terminal 10 may detect the lower side based on the posture of the own device obtained by the sensor.

According to the foregoing embodiment, the fan-shaped region is a fixed region. However, it should be appreciated that the present invention is not limited to such a structure. Alternatively, the user may set or change a fan-shaped region. For example, information processing terminal 10 may have a setting function that initially sets a fan-shaped region or changes it. As a method that sets a fan-shaped region, control section 14 may display a message that prompts the user to perform a touch operation (tap operation, flick operation, drag operation, or the like) for display 13 with his or her thumb while he or she is holding information processing terminal 10. When the user touches display 13, control section 14 may designate the fan-shaped region based on touch position information which is notified to control section 14 by input section 12.

Further alternatively, information processing terminal 10 may set a fan-shaped region when the user starts to input a character. In this case, information processing terminal 10 may set the fan-shaped region in the foregoing manner.

According to this embodiment, for example, characters of hira-kana are input and converted. It should be appreciated that characters that are input are not limited to characters of hira-kana. Alternatively, information processing terminal 10 may input characters of kate-nana in the foregoing structure and operation. Further alternatively, the present invention may be applied to a structure that inputs alphanumeric characters. In this case, alphabetic characters may be categorized as a plurality of second groups for every predetermined number of characters. Alphabetic characters that are arranged at the forefront of the individual second groups are set as representative characters that represent the individual second groups. The alphabetic characters are categorized as a first group.

According to this embodiment, information processing terminal 10 may translucently display items that are displayed to input characters such as representative character string 23, column character string 24, and conversion candidate string 25

### (First Modification)

According to the foregoing embodiment, for example, column character string 24 is flicked in the same manner as representative character string 23 so as to scroll it. However, it should be appreciated that the present invention is not limited to such a structure. Alternatively, individual characters of column character string 24 may be displayed at fixed positions such that they are not scrolled. A desired column character may be designated without need to scroll the column character string provided that the number of column characters is not large and provided that they can be displayed on an arc that intersects the lower side and a lateral side of display 13.

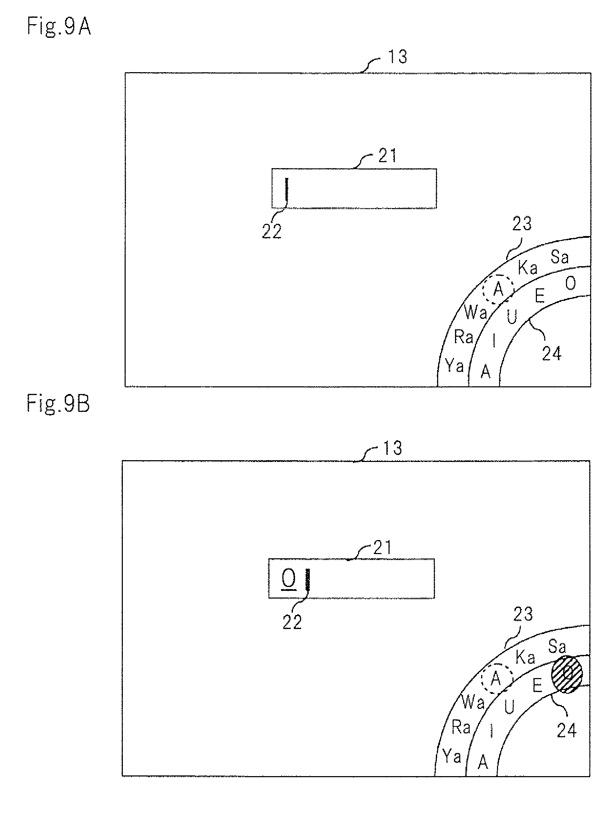

Figs. 9A and 9B are schematic diagrams showing an example of a display image of information processing terminal 10 according to a first modification of the first exemplary embodiment in which column character string 24 is not scrolled.

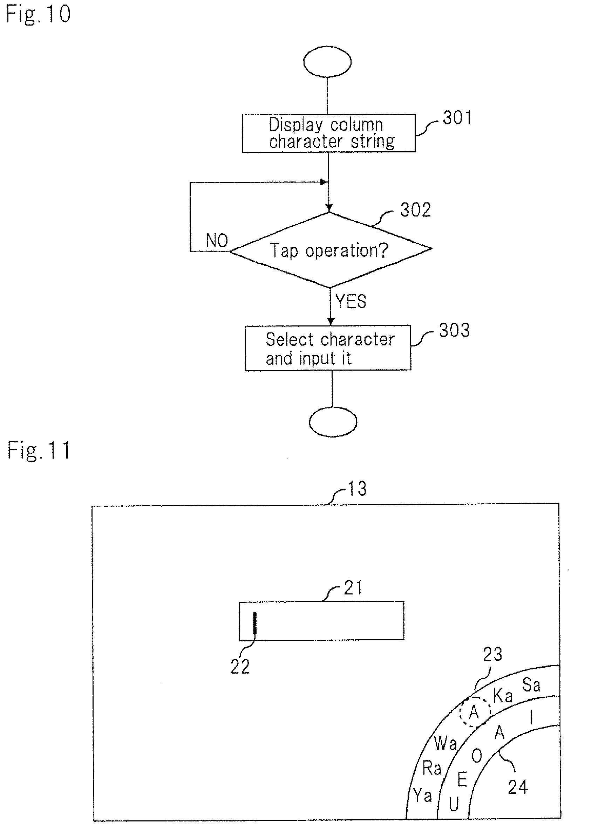

Fig. 10 is a flow chart showing an operation performed when a character is selected on information processing terminal 10 according to the first modification of the first exemplary embodiment in which column character string 24 is not scrolled.

The operation that is performed when a column is selected on information processing terminal 10 according to this modification is the same as the operation shown in Fig. 3. However, the positions of characters of the column character string displayed at step 106 are fixed. In the example shown in Fig. 9A, "A" of representative character string 23 is designated by the user and "A," "I," "U," "E," and "O" of column character string 24 of column "A" are displayed at fixed positions.

Referring to Fig. 10, while Information processing terminal 10 displays control section 14 on display 13 (at step 301), it monitors the occurrence of a tap operation for a character of column character string 24 (at step 302). For example, as shown in Fig. 9A, while information processing terminal 10 displays "A," "I," "U," "E," and "O" of column character string 24 of column "A," it monitors the occurrence of a tap operation for column character string 24.

When the user taps any character of column character string 24, information processing terminal 10 decides the taped column character and inputs it to character input region 21 (at step 303). For example, if the user taps "O" of columns character string 24 as shown in Fig. 9B, information processing terminal 10 inputs "O" to character input region 21.

According to this modification, since column character string 24 is not scrolled by a flick operation, the user may slide his or her finger on column character string 24 so as to select his or her desired column character.

In addition, according to this modification, as shown in Figs. 9A and 9B, the column characters of column character string 24 are displayed from the lower left to the upper light of an arc. However, it should be appreciated that the present invention is not limited to such a structure. Alternatively, when the user touches his or her desired representative character of representative character string 23, the column characters of column character string 24 may be rearranged and displayed such that they start in the neighborhood of the touch position.

Fig. 11 is a schematic diagram showing another example of a display image on information processing terminal 10 according to the first modification of the first exemplary embodiment in which column character string 24 is not scrolled. When the user selects his or her desired representative character "A," then "A," "I," "U," "E," and "O" of column character string 24 are displayed such that they start in the neighborhood of the touch position. Since the user can know the positions of the individual characters of column character string 24 based on the relationship of positions from the touch position of the representative character, he or she can successively select a column character.

### (Second Modification)

The operation that selects a column on information processing terminal 10 according to the first modification is the same as the operation shown in Fig. 3. However, the present invention is not limited to such a structure. In the example shown in Fig. 3, when the user flicks his or her desired portion of representative character string 23, information processing terminal 10 displays the flicked portion of representative character string 23. When the user taps any representative character of representative character string 23, information processing terminal 10 displays column character string 24 corresponding to the tap operation.

Alternatively, information processing terminal 10 may display column character string 24 corresponding to a representative character displayed at a predetermined position (hereinafter referred to as "selection position") of representative character string 23. When the user flicks his or her desired representative character of representative character string 23, information processing terminal 10 may display the flicked representative character at the selection position and simultaneously display column character string 24 corresponding to the selection character.

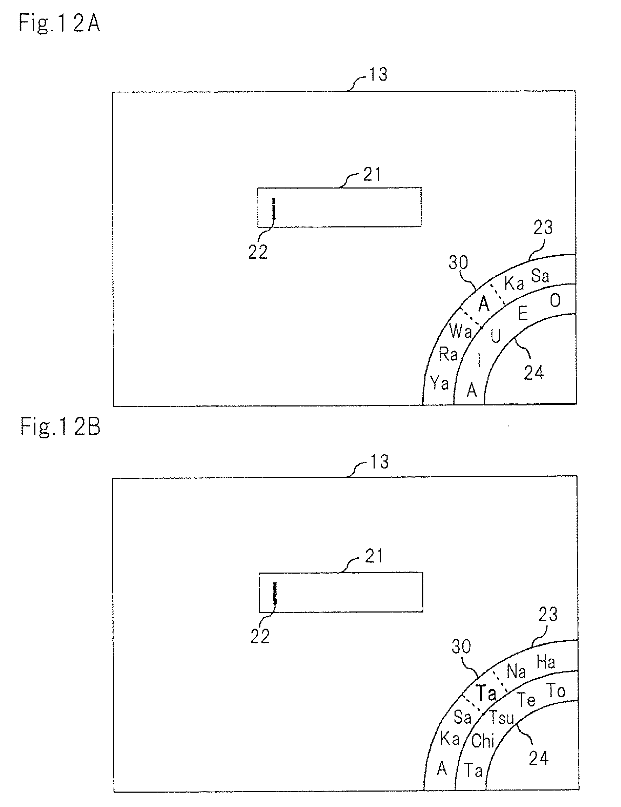

Figs. 12A and 12B are schematic diagrams showing examples of display images of information processing terminal 10 according to a second modification of the first exemplary embodiment. Referring to Fig. 12A, representative character "A" is displayed at selection position 30. Thus, column characters of column "A" are displayed in column character string 24. When the user performs a flick operation, column character string 24 moves. When representative character "Ta" is displayed at selection position 30 as shown in Fig. 12B, the column characters of column "Ta" are displayed in column character string 24.

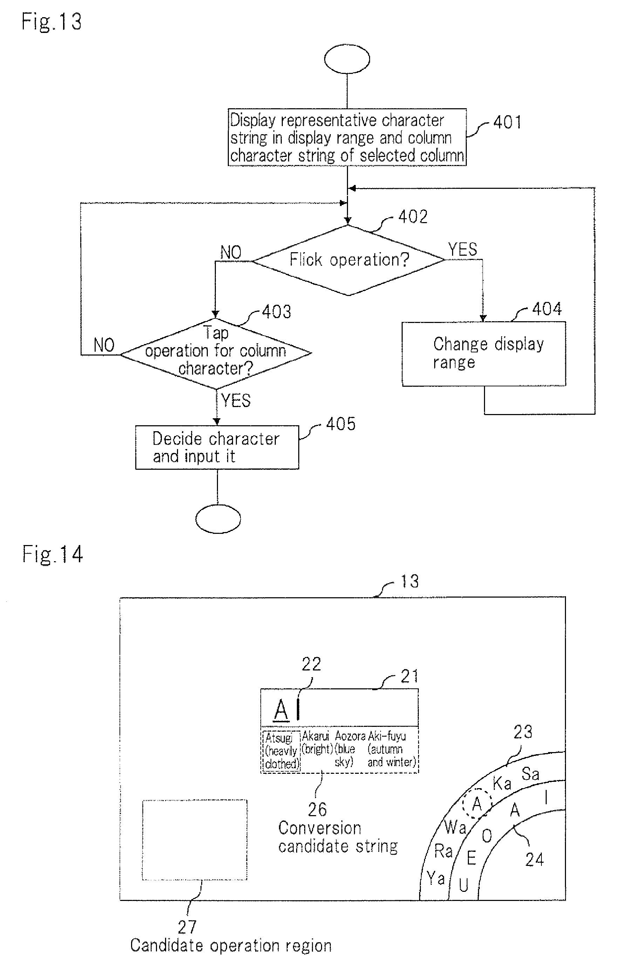

Fig. 13 is a flow chart showing a column selection operation and a character selection operation performed on information processing terminal 10 according to the second modification of the first exemplary embodiment.

Referring to Fig. 13, when information processing terminal 10 becomes the character input state, information processing terminal 10 displays representative character string 23 in the display range and column character string 24 corresponding to a representative character is displayed at a predetermined position (for example, at the center of the character string) of representative character string 23 on display 13 (at step 401). Thereafter, information processing terminal 10 monitors the occurrences of a flick operation for the region of representative character string 23 and a tap operation for a character of column character string 24 (at steps 402 and 403).

When the user flicks the region in which representative character string 23 is displayed, information processing terminal 10 successively changes characters of representative character string 23 in the display range corresponding to the flick operation and simultaneously and successively displays the column character string corresponding to the representative character at the predetermined position (at step 404).

When the user taps any character of column character string 24, information processing terminal 10 decides the taped column character and inputs the decided column character to character input region 21 (at step 405).

According to the second modification, since column characters corresponding to a representative character displayed at the predetermined position are automatically displayed, the user can quickly input a character without needing to tap a representative character.

According to the second modification, whether representative character string 23 is displayed inside or outside column character string 24 is not specified. Assuming that the user flips and drags representative character string 23 while viewing changes of column characters of column character string 24, it is preferred that column character string 24 be displayed outside representative character string 23 such that he or she can operate information processing terminal 10 with high visibility.

In addition, since the number of characters of column character string 24 is smaller than that of representative character string 23, column character string 24 may be displayed inside representative character string 23 as shown in Figs. 12A and 12B such that as many characters of representative character string 23 as possible can be displayed. In particular, if the positions of column characters of column character string 24 are fixed and they are not scrolled by a flick operation like the first modification, when the user gets accustomed to column character string 24, he or she can know the positions of the column characters without seeing the display, and even if column character string 24 is displayed inside representative character string 23, the visibility will not become a problem.

According to the second modification, if the user quickly flicks representative character string 23, column character string 24 quickly changes. However, it should be appreciated that the present invention is not limited to such a structure. Alternatively, according to the second modification, when the user quickly flicks representative character string 23, information processing terminal 10 may fix an image of the display region of column character string 24. As a result, the processing amount for the image can be reduced. While the user is quickly flicking representative character string 23, information processing terminal 10 may display an image of the region of column character string 24 that is not changed by the flick operation. Alternatively, while information processing terminal 10 is quickly scrolling representative character string 23, information processing terminal 10 may display a particular pattern or a monochrome image in the region of column character string 24.

### (Third Modification)

According to the first exemplary embodiment, for example, conversion candidates are arranged on an arc that is concentric with the arcs of representative character string 23 and column character string 24 and special keys used to input characters are arranged inside the arc of column character string 24. The user can edit input characters, select a conversion candidate, and confirm it using these special keys. However, it should be appreciated that the present invention is not limited to such a structure. Alternatively, instead of the hand that holds information processing terminal 10, the other hand may control selection candidates.

Information processing terminal 10 according to the third modification includes a structure that performs an operation for conversion candidates with a finger of the other hand instead of the hand that operates representative characters and column characters.

Information processing terminal 10 according to the third modification displays words that start with a character afhira-kana that is displayed in the character input region as selection candidates in the neighborhood of the character input region.

Fig. 14 is a schematic diagram showing an example of a display image of display 13 according to the third modification. Referring to Fig. 14, conversion candidate string 26 is displayed below character input region 21. Displayed in conversion candidate string 26 are words of a plurality of selection candidates. Among them, "Atsugi (heavily clothed)" has been selected. In Fig. 14, broken lines that surround "Atsugi (heavily clothed)" denote that it has been selected.

In addition, information processing terminal 10 accepts a control to a selection candidate based on a touch operation for a lower portion (candidate operation region) located opposite to representative character string 23 and column character string 24 on display 13.

Specifically, when control section 14 detects a flick operation or a drag operation for the candidate operation region based on touch position information received from input section 12, control section 14 changes the selection of the selection candidates corresponding to the operation. For example, when the user flicks the candidate operation region rightward in the state shown in Fig. 14, control section 14 changes the selection of the conversion candidates from "Akarui (bright)" to "Aozora (blue sky)" to "Aki-fuyu (Autumn and winter)."

If control section 14 detects a tap operation for the candidate operation region in the state in which a selection candidate has been selected, control section 14 recognizes that the selected selection candidate has been designated and inputs the word of the selected selection candidate to character input region 21. For example, when the user performs a tap operation for the candidate operation region in the state shown in Fig. 14, "Atsugi (heavily clothed)", that is the selected selection candidate, is input to character input region 21.

### (Fourth Modification)

As described above, according to the first exemplary embodiment, conversion candidates are arranged on an arc that is concentric with the arcs of representative character string 23 and column character string 24 and special keys used to input characters are arranged inside column character string 24. However, the present invention is not limited to a structure in which special keys are arranged inside column character string 24. Alternatively, special keys may be arranged in contact with or in the neighborhood of the outer edge of display 13 instead of the inside of column character string 24.

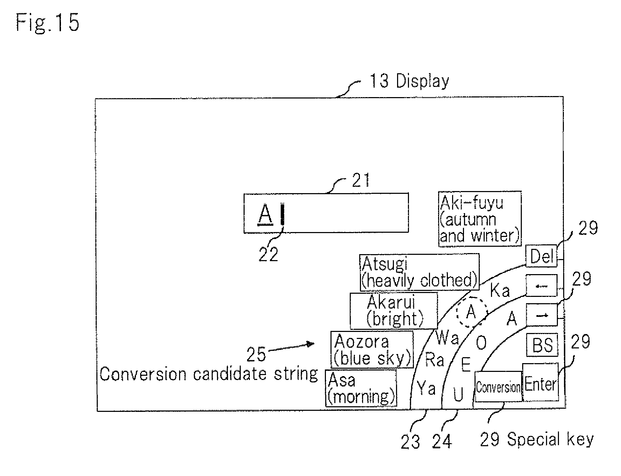

Fig. 15 is a schematic diagram showing an example of an arrangement of special keys according to a fourth modification. Referring to Fig. 15, special keys 29 are arranged in the neighborhood of and along the outer edge of display 13. Since the user can identify the positions of special keys 29 with his or her hand and finger from the outer edge of display 13, when he or she gets accustomed to special keys 29, he or she may be able to blind-touch them. Even if special keys 29 are displayed adjacent to the arcs of representative character string 23 and column character string 24, since the user can identify the positions of special keys 29 from the outer edge, it is unlikely that the user will unintentionally operate them.

### (Fifth Modification)

According to the first exemplary embodiment, as shown in Figs. 4D to 4E, when the user designates his or her desired representative character from representative character string 23, column character string 24 of the column corresponding to the representative character are displayed. At that point, the positions of arcs of represent representative character string 23 and column character string 24 do not change. However, it should be appreciated that the present invention is not limited to such a structure. According to a fifth modification of the first exemplary embodiment, the positions of the arcs of represent representative character string 23 and column character string 24 change.

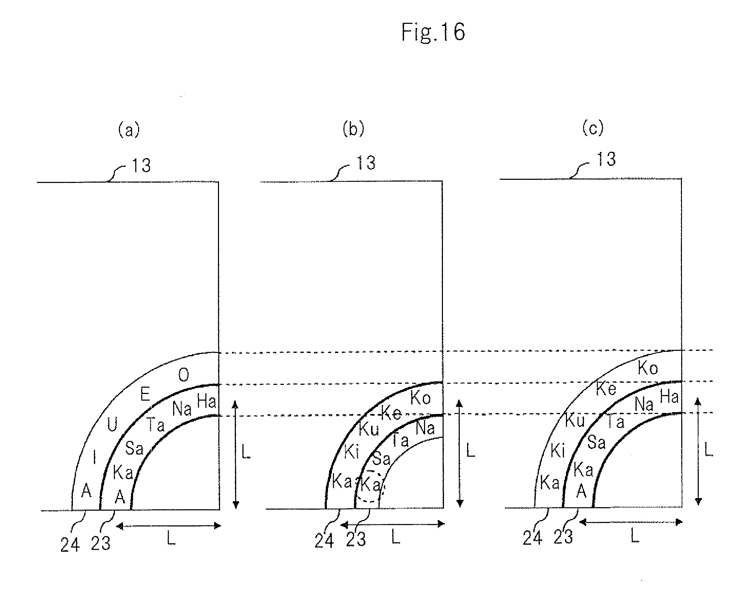

Fig. 16 is a schematic diagram showing changes of a display image according to the fifth modification. According to this modification, positions at which the user can easily perform a touch operation including a flick operation and a tap operation with the thumb of the hand that holds information processing terminal 10 are designated (touch fitting position). It is assumed that the touch fitting position is in the neighborhood of an arc having a radius of L around a corner of the display. In Fig. 16, a region surrounded by two thick arcs is a touch fitting position.

When the user is trying to input a column character, information processing terminal 10 displays representative character string 23 at the touch fitting position as shown in Fig. 16(a). When the user touches any representative character in this state, information processing terminal 10 moves representative character string 23 displayed at the touch fitting position so as to display column character string 24 of the column corresponding to the touched representative character at the touch fitting position. Fig. 16(b) shows that the user has designated representative character "Ka" and column character string 24 of column "Ka" is displayed at the touch fitting position.

When the user touches any column character in this state, information processing terminal 10 inputs the touched column character into the character input region (not shown in Fig. 16) and returns representative character string 23 to the touch fitting position as shown in Fig. 16(c).

According to this modification, since the user can operate information processing terminal 10 at his or her convenient position, he or she can easily input characters.

According to this modification, representative character string 23 and column character string 24 are appropriately displayed at the touch fitting position. However, the present invention is not limited to such a structure. Besides representative character string 23 and column character string 24, special keys such as conversion key, conversion candidates, or both of them may be displayed at the touch fitting position.

The shape of the touch fitting position according to this modification may not be limited to the foregoing arc shape, but may be another shape.

Alternatively, the touch fitting position may be changed. In other words, the user may set the touch fitting position in an initial setting or on a setting menu of information processing terminal 10. Alternatively, information processing terminal 10 may set the touch fitting position to a region having a predetermined shape including the position at which a touch operation is performed in a predetermined state. For example, when the user touches his or her convenient position several times in a state in which he or she can set the touch fitting position using a user's menu, information processing terminal 10 may calculate the average value of the touch positions (average touch position) and set the touch fitting position on an arc including the average touch position. In this case, since the user can set his or her convenient touch fitting position, he or she can easily input characters.

Alternatively, the touch fitting position may be set to a region that includes a position that the user initially touches after information processing terminal 10 enters the character input state. In this case, the user can easily set the touch fitting position without needing to set the touch fitting position in the initial setting or on the setting menu.

In the foregoing description, when the user touches any column character in the state in which column character string 24 is displayed at the touch fitting position, information processing terminal 10 returns representative character string 23 to the touch fitting position. However, the present invention is not limited to such a structure. Alternatively, when the user touches a position that is neither representative character string 23, nor column character string 24 in the state in which column character string 24 is displayed at the touch fitting position, information processing terminal 10 may return representative character string 23 to the touch fitting position.

### (Second Exemplary Embodiment)

According to the first exemplary embodiment, for example, representative character string 23 and column character string 24 in the fan-shaped region, in which the thumb of the hand that holds information processing terminal 10 will touch, are arranged on arcs. Alternatively, representative character string 23 and column character string 24 may not be always arranged on arcs.

According to the second exemplary embodiment, representative character string 23 and column character string 24 in a fan-shaped region are arranged on straight lines.

Although the basic structure and operation of information processing terminal 10 according to the second exemplary embodiment are the same as those of the first exemplary embodiment, they differ in display images of representative character string 23 and column character string 24.

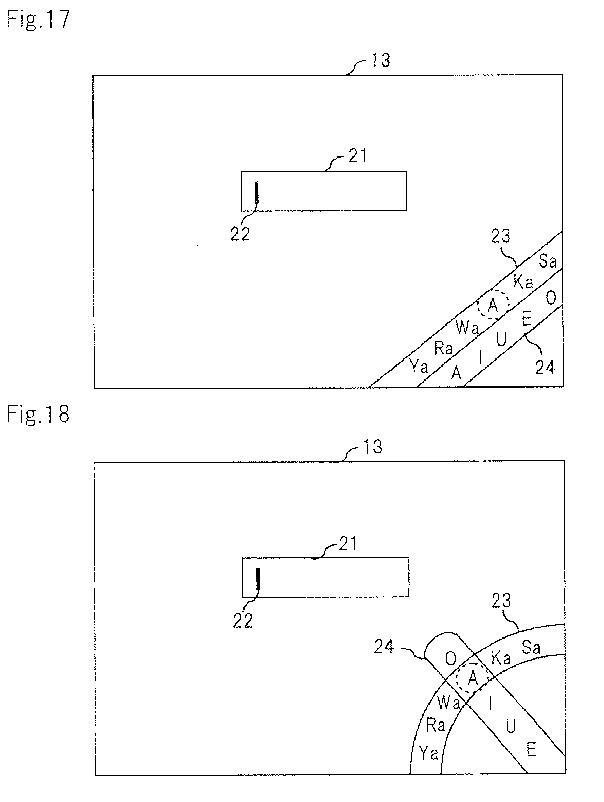

Fig. 17 is a schematic diagram showing an example of a display image of information processing terminal 10 according to the second exemplary embodiment. Referring to Fig. 17, representative character string 23 and column character string 24 are displayed on straight lines at a lower right portion of display 13 and that intersect the lower side and right side thereof. Although this display image corresponds to that in the state shown in Fig. 4E or Fig. 6A in the first exemplary embodiment, representative character string 23 and column character string 24 are also displayed on straight lines in other states.

According to the first exemplary embodiment, representative character string 23 and column character string 24 are arranged on arcs such that the user can easily flick them with his or her thumb. A flick operation by the thumb can be approximated by a straight line as long as the flick operation is performed for a short distance. Thus, according to this embodiment, representative character string 23 and column character string 24 are arranged on straight lines. In addition, since the user may also perform a flick operation with a finger of the other hand instead of the hand that holds information processing terminal 10 or a flick operation using a touch pen, he or she may experience good operability for straight lines on which representative character string 23 and column character string 24 are arranged.

### (Third Exemplary Embodiment)

According to the first and second exemplary embodiments, for example, representative character string 23 and column character string 24 are arranged such that they do not intersect each other. However, it should be appreciated that the present invention is not limited to such a structure. Alternatively, representative character string 23 and column character string 24 may be arranged on lines that intersect each other.

According to the first and second exemplary embodiments, for example, representative character string 23 and column character string 24 are arranged on concentric arcs or straight lines. However, it should be appreciated that the present invention is not limited to such a structure. Alternatively, one of representative character string 23 and column character string 24 may be arranged on a straight line and the other may be arranged on a curved line.

According to the first and second exemplary embodiments, representative character string 23 and column character string 24 are arranged on lines through which a flick operation and a drag operation that move the base of the thumb are performed. However, it should be appreciated that the present invention is not limited to such a structure.

According to a third exemplary embodiment of the present invention, representative character string 23 is arranged on an arc, whereas column character string 24 is arranged on a straight line that intersects with the arc of representative character string 23.

Although the basic structure and operation of information processing terminal 10 according to the second exemplary embodiment are the same as those according to the first exemplary embodiment, they differ in display images of column character string 24.

Fig. 18 is a schematic diagram showing an example of a display image of information processing terminal 10 according to the third exemplary embodiment. Referring to Fig. 18, although representative character string 23 is arranged on an arc in the same manner as the first exemplary embodiment, column character string 24 is arranged on a straight line that intersects a nearly center portion of the arc of representative character string 23.

As relatively easy flick and drag operations with the thumb of the hand that holds information processing terminal 10, the thumb may be bent and stretched unlike the first and second exemplary embodiments in which the base of the thumb is moved. According to the third exemplary embodiment, column character string 24 is arranged such that a flick operation and a drag operation are performed by bending and stretching the thumb.

According to the third exemplary embodiment, when the user selects a column on information processing terminal 10, he or she may perform a tap operation in the same manner as the first exemplary embodiment. As an alternative to that, the user may perform another operation. For example, information processing terminal 10 may display column character string 24 corresponding to a representative character displayed at a predetermined position (the center) of representative character string 23 in the same manner as the second modification of the first exemplary embodiment.

### (Fourth Exemplary Embodiment)

According to the third exemplary embodiment, for example, representative character string 23 is arranged on a curved line (arc) and column character string 24 is arranged on a straight line. However, it should be appreciated that the present invention is not limited to such a structure. According to a fourth exemplary embodiment of the present invention, although a combination of a curved line and a straight line are used like the third exemplary embodiment, they are used in a different manner from the third exemplary embodiment.

According to the fourth exemplary embodiment, representative character string 23 is arranged on a straight line that has a locus of which the thumb of the hand that holds information processing terminal 10 is bent and stretched, whereas column character string 24 is arranged on a circle on which the thumb of the hand that holds information processing terminal 10 is naturally present. In addition, column character string 24 is arranged on a circle on which the thumb of the hand that holds information processing terminal 10 is naturally present. Thus, the user can easily perform flick, drag, and tap operations for column character string 24.

Although the basic structure and operation of information processing terminal 10 according to the fourth exemplary embodiment are the same as those according to the first exemplary embodiment, they differ in display images of representative character string 23 and column character string 24.

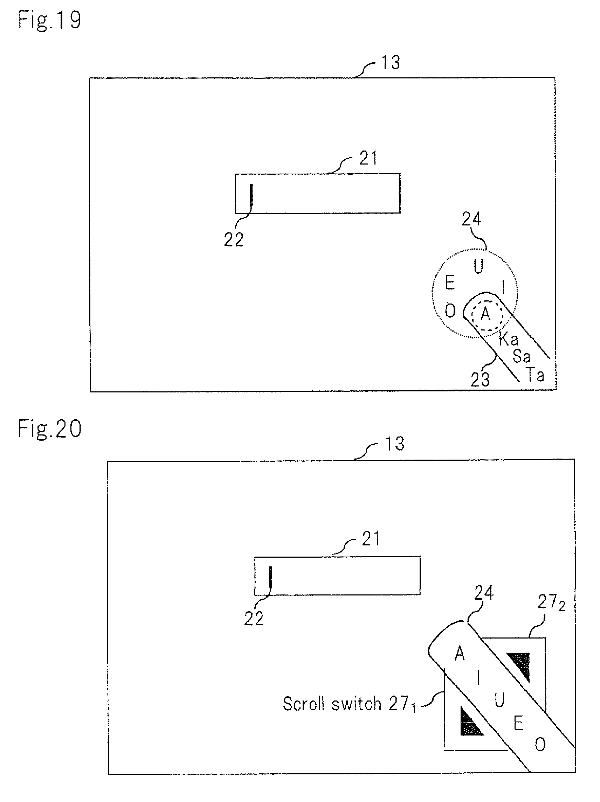

Fig. 19 is a schematic diagram showing an example of a display image on information processing terminal 10 according to the fourth exemplary embodiment. Referring to Fig. 19, representative character string 23 is arranged on a straight line that has a locus of which the thumb of the right hand is bent and stretched, whereas column character string 24 is arranged on a circle on which the thumb is naturally present.

According to this embodiment, when the user performs a flick operation or a drag operation, information processing terminal 10 may rotate column character string 24 arranged on a circle so as to move a desired character to a desired position. Such a movement may not be performed.

According to this embodiment, when the user selects a column on information processing terminal 10, he or she may perform a tap operation in the same manner as the first exemplary embodiment. As alternatively to that, the user may perform another operation. For example, information processing terminal 10 may display column character string 24 corresponding to a representative character displayed at a predetermined position (for example, the edge of the character string) of representative character string 23 on display 13 in the same manner as the second modification of the first exemplary embodiment.

### (Fifth Exemplary Embodiment)

According to the first exemplary embodiment, information processing terminal 10 selects a desired character of hira-kana in a two-hierarchical selection levels of representative character string 23 and column character string 24. However, it should be appreciated that the present invention is not limited to such a structure. According to the foregoing first aspect, as long as information processing terminal 10 arranges a plurality of items in a string, displays part of the string in a fan-shaped region at a lower portion of display 13, scrolls the string corresponding to an operation, and changes items on display 13, information processing terminal 10 can contribute to providing software keys that allow a display region on a display to widen and the user to easily input data.

Thus, according to a fifth exemplary embodiment of the present invention, column characters included in a column are arranged on a straight line as items that represent the column instead of representative characters unlike the first exemplary embodiment. In other words, column character string 24 arranged on a straight line is used instead of representative characters as items that represent columns. When the user taps a column character, the column character is selected. Thus, according to the fifth exemplary embodiment, a display image of two hierarchical selection levels is not required, unlike the first exemplary embodiment.

In addition, according to the fifth exemplary embodiment, although items are arranged in a string and part of the string is displayed in a fan-shaped region at a lower portion of display 13 in the same manner as the first exemplary embodiment, only one item that represents a column is displayed. Moreover, according to the fifth exemplary embodiment, scroll software switches that scroll a string are provided instead of a flick operation and a drag operation, unlike the first exemplary embodiment.

Although the basic structure and operation of information processing terminal 10 according to the fifth exemplary embodiment are the same as those according to the first exemplary embodiment, they differ in that column character string 24 of a column is displayed instead of representative character string 23 and that scroll software switches are used.

Fig. 20 is a schematic diagram showing an example of a display image on information processing terminal 10 according to the fifth exemplary embodiment. Referring to Fig. 20, "A," "I," "U," "E," and "O" of column character string 24 of column "A" that is an item that represents column "A" are displayed and scroll switches 27₁ and 27₂ that are scroll software switches are located on both sides of column character string 24.

When the user selects a column on information processing terminal 10 according to the fifth exemplary embodiment, information processing terminal 10 detects a touch operation (tap operation or long pressing operation) for scroll switch 27₁ or 27₂ and successively changes column character string 24 corresponding to the operation. When the user selects a character on information processing terminal 10, it detects a tap operation for the column character of column character string 24, selects the character, and displays it in character input region 21.

According to this embodiment, a character of column character string 24 displayed on display 13 may be scrolled by a flick operation or a drag operation.

### (Sixth Exemplary Embodiment)

Although the basic structure and operation of information processing terminal 10 according to a sixth exemplary embodiment of the present invention are the same as those according to the first exemplary embodiment, they differ in that column tabs 28 instead of representative characters are displayed on a circle and that column character string 24 is displayed on a circle of column tab 28.

According to the sixth exemplary embodiment, all column characters included in a column are arranged in the same manner as the fifth exemplary embodiment. In other words, as items that represent columns, column character strings 24 are used instead of representative characters. However, according to the sixth exemplary embodiment, column characters of column character string 24 are arranged on a circle instead of a straight line, unlike the fifth exemplary embodiment.

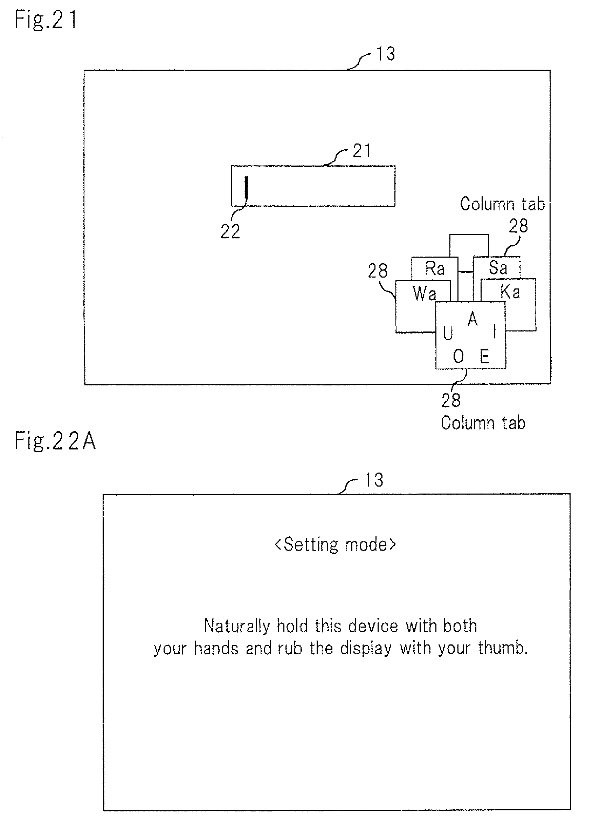

Fig. 21 is a schematic diagram showing an example of a display image on information processing terminal 10 according to the sixth exemplary embodiment. Referring to Fig. 21, a plurality of items (column tabs) 28 that represent a plurality of columns are arranged on a circle that mimics a three-dimensional presentation. When the user performs a flick operation or a drag operation along the circle, information processing terminal 10 changes column tabs 28 as the circle rotates.

Information processing terminal 10 according to this embodiment selects a column corresponding to column tab 28 at a predetermined position. In the example shown in Fig. 21, column "A" corresponding to column tab 28 that is displayed in the foreground has been selected.

According to the sixth exemplary embodiment, all column character strings 24 of items that represent individual columns are not displayed. Instead, column character string 24 corresponding only to column tab 28 that is displayed at the selected position is displayed. When the user taps any column character of column character string 24, information processing terminal 10 selects the character and displays the character in character input region 21.

According to the sixth exemplary embodiment, for example, a plurality of column tabs 28 are arranged in a string on a circle that mimics a three-dimensional presentation. However, the circle may be neither a perfect circle nor a perfect ellipse, but a line (ring) on which column tables are cyclically displayed.

According to the second aspect, part or all of the foregoing embodiments may be rephrased as the following supplements. However, it should be appreciated that the present invention is not limited to such supplements.

### (Seventh Exemplary Embodiment)

According to the first to sixth exemplary embodiments, for example, the positions of representative character string 23, column character string 24, conversion candidate string 25, candidate operation region 27, column tabs 28, and special keys 29 are pre-fixed. However, it should be appreciated that the present invention is not limited to such a structure. Alternatively, the position and size of a fan-shaped region that displays these characters and so forth may be changed to correspond to a user's operation so as to improve the operability of information processing terminal 10.

According to a seventh exemplary embodiment of the present invention, for example, the positions of representative character string 23 and column character string 24 and the radii of the arcs according to the first exemplary embodiment can be changed.

Although the basic structure and operation of information processing terminal 10 according to the seventh exemplary embodiment are the same as those according to the first exemplary embodiment, they differ in that the former has a setting mode. The setting mode is activated for example when the user performs the initial setting or selects a setting mode on a menu screen. In the setting mode, when the user performs a touch operation prompted by sound or screen message, he or she can adjust display images of representative character string 23 and column character string 24.

When the user selects the setting mode on the menu, information processing terminal 10 activates it. When the user naturally performs a drag operation or a flick operation while he or she is naturally holding information processing terminal 10 in the setting mode, information processing terminal 10 detects a locus of the flick operation and decides the display position of representative character string 23 or column character string 24 and the radii of the arcs such that the arcs include the locus. Thereafter, information processing terminal 10 displays representative character string 23 and column character string 24 at the display positions and with the radii of the arcs in the character input state.

Figs. 22A to 22C are schematic diagrams showing examples of display images on information processing terminal 10 according to the seventh exemplary embodiment.

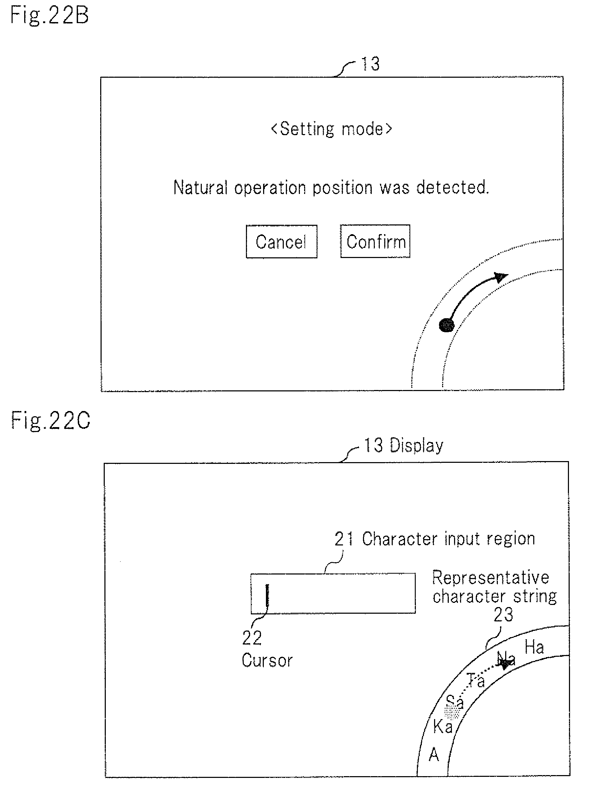

When information processing terminal 10 activates the setting mode, information processing terminal 10 displays a screen as shown in Fig. 22A so as to prompt the user to perform a touch operation on display 13. When the user performs a flick operation or a drag operation for display 13, information processing terminal 10 detects a locus of the touch position and displays the locus on the screen as shown in Fig. 22B. In this case, the user can cancel or confirm the setting. When the user cancels the setting, information processing terminal 10 displays the screen shown in Fig. 22A such that the user can perform the setting again. When the user confirms the setting, information processing terminal 10 decides the display positions of representative character string 23 and the radius of the arc such that the arc includes the locus of the detected touch position, decides the display position of column character string 24 and the radius of the arc, and then completes the setting mode.

Thereafter, as shown in Fig. 22C, information processing terminals 10 displays representative character string 23 and column character string 24 at the display positions and with the radii of the arcs that have been decided in the setting mode.

Part or all of the foregoing embodiments and modifications can be rephrased as the following supplements. However, it should be appreciated that the present invention is not limited to the following supplements.

### (Supplement 1)

An information processing terminal, comprising:
a display and input section that displays an image on a display and accepts an operation; and
control means that arranges a plurality of items included in a first item group in a string, displays at least part of the string in a predetermined fan-shaped region located at a lower portion of said display, and displays at least part of items included in a second item group corresponding to an item selected from said first item group corresponding to a selection operation on said display in said fan-shaped region.

### (Supplement 2)

The information processing terminal as set forth in supplement 1,
wherein said display is formed in a quadrilateral shape, and
wherein said string is present on a line that intersects a lower side and one of lateral sides of said display.

### (Supplement 3)

The information processing terminal as set forth in supplement 2,
wherein said string is present on a straight line or an arc that passes through a point that said lower side intersects and a point that said lateral side intersects.

### (Supplement 4)

The information processing terminal as set forth in supplement 1,
wherein when a selection operation is performed for an item of said first item group displayed on said display, said control means displays, in the neighborhood of or in contact with the selected item of said first item group, at least part of a plurality of items included in said second item group associated with the selected item of said first item group.

### (Supplement 5)

The information processing device as set forth in supplement 4,
wherein said control means displays the string of said first item group on a straight line and displays said at least part of items of said second item group in a string on a straight line adjacent to the string of said first item group.

### (Supplement 6)

The information processing device as set forth in supplement 4,
wherein said control means displays the string of said first item group on an arc and displays said at least part of items of said second item group in a string on an arc that is concentric with the arc of the string of said first item group.

### (Supplement 7)

The information processing device as set forth in supplement 4,
wherein said control means displays said at least part of items of said second item group in a string on a line that intersects said selected item of said first item group at an intersection point that is said selected item of said first item group.

### (Supplement 8)

The information processing device as set forth in supplement 4,
wherein said control means displays said at least part of items of said second item group in a string around said selected item of said first item group.

### (Supplement 9)

The information processing terminal as set forth in any one of supplements 4 to 8,
wherein said control means scrolls the string of the items of said second item group corresponding to an operation for said display so as to change items on said display.

### (Supplement 10)

The information processing terminal as set forth in any one of supplements 4 to 9,
wherein the items of said second item group are characters, and
wherein when a selection operation is performed for a character of said second item group, said control means displays the character corresponding to the selection operation in a character input region and displays words associated with the character displayed in said character input region as selection candidates.

### (Supplement 11)

The information processing terminal as set forth in supplement 10,
wherein said control means displays said selection candidates in said fan-shaped region or in the neighborhood thereof.

### (Supplement 12)

The information processing terminal as set forth in supplement 10 or 11,
wherein said control means displays said selection candidates at positions and in sizes based on their priorities.

### (Supplement 13)

The information processing terminal as set forth in supplement 10,
wherein said control means displays said selection candidates in the neighborhood of said character input region.

### (Supplement 14)

The information processing terminal as set forth in supplement 13,
wherein said control means controls said selection candidates corresponding to an operation at a lower portion opposite to said fan-shaped region of said display.

### (Supplement 15)

The information processing terminal as set forth in supplement 14,
wherein an operation that selects one of said selection candidates is a flick operation or a drag operation.

### (Supplement 16)

The information processing terminal as set forth in claim 14 or 15,
wherein an operation that designates one of said selection candidates is a tap operation.

### (supplement 17)

The information processing terminal as set forth in any one of supplements 10 to 16,
wherein said selection candidates are words that start with a character displayed in said character input region.

### (Supplement 18)

The information processing terminal as set forth in any one of supplements 1 to 17,
wherein when said selection operation is performed for said item of said first item group, said control means moves the string of said first item group and displays, in a region that includes the position of the selected item of said first item group, at least part of a plurality of items included in said second item group associated with the selected item of said first item group.

### (Supplement 19)

The information processing terminal as set forth in supplements 1 to 18,
wherein said control means translucently displays said items on said display.

### (Supplement 20)

The information processing terminal as set forth in any one of supplements 1 to 19,
wherein said control means sets said fan-shaped region based on a position at which said display and input section detects an operation on said display in a predetermined state.

### (Supplement 21)

An operation control method for an information processing terminal that displays a screen on a display and accepts an operation, comprising:
arranging a plurality of items included in a first item group in a string and displaying at least part of the string in a predetermined fan-shaped region at a lower portion of said display; and
displaying at least part of items included in said second item group corresponding to an item selected from said first item group corresponding to a user's selection operation in said fan-shaped region.

Although the individual embodiments and their modifications have been described, it should be appreciated that the present invention is not limited to these embodiments and their modifications and that these embodiments and their modification can be used in combinations and part of structure thereof may be changed.

With reference to the embodiments and their modifications, the present invention has been described. However, it should be understood by those skilled in the art that the present invention is not limited to the foregoing embodiments and their modification and that the structure and details of the present invention may be changed in various manners without departing from the scope of the present invention.

The present application claims a priority based on Japanese Patent Application JP 2010-138512 filed on June 17, 2010, the entire contents of which are incorporated herein by reference in its entirety.

## Claims

1. An information processing terminal, comprising:
a display and input section that displays an image on a display and accepts an operation; and
control means that arranges a plurality of items included in a first item group in a string, displays at least part of the string in a predetermined fan-shaped region located at a lower portion of said display, scrolls said string corresponding to an operation for said display, and changes items on said display.

2. The information processing terminal as set forth in claim 1,
wherein when a user holds said information processing terminal with his or her hands from both lateral sides of said information processing terminal, said string is present on a line that intersects with a first side of said display that is in parallel with the body of said user and a second side that is any one of lateral sides of said display, said first side of said display being arranged on said user's side.

3. The information processing terminal as set forth in claim 1,
wherein said display is formed in a quadrilateral shape, and
wherein said string is present on a line that intersects a first side that is a lower side of said display and a second side that is any one of lateral sides of said display.

4. The information processing terminal as set forth in claim 2 or 3,
wherein said string is present on a straight line or an arc that passes through a point that said first side intersects and a point that said second side intersects.

5. The information processing terminal as set forth in claim 1,
wherein when a selection operation is performed for an item displayed on said display, said control means selects said item for which the selection operation has been performed.

6. The information processing terminal as set forth in claim 5,
wherein said selection operation is any one from among a tap operation, a flick operation, and a drag operation for said item so as to display said item at a predetermined position.

7. The information processing terminal as set forth in claim 5 or 6,
wherein said control means displays at least part of a plurality of items included in a second item group associated with said item selected corresponding to said selection operation in the neighborhood of or in contact with said item.

8. The information processing terminal as set forth in claim 7,
wherein said control means displays the string of said first item group on a straight line and said at least part of items of said second item group in a string on a straight line adjacent to the string of said first item group.

9. The information processing terminal as set forth in claim 7,
wherein said control means displays the string of said first item group on an arc and displays said at least part of items of said second item group in a string on an arc that is concentric with the arc of the string of said first item group.

10. The information processing terminal as set forth in claim 7,
wherein said control means displays said at least part of items of said second item group in a string on a line that intersects the string of said first item group at an intersection point that is said selected item of said first item group.

11. The information processing terminal as set forth in claim 7,
wherein said control means displays said at least part of items of said second item group in a string around said selected item of said first item group.

12. The information processing terminal as set forth in claim 5 or 6,
wherein said control means displays, in said fan-shaped region, items included in said first item group in a string and in a shape of a ring and displays, at the position of said item selected corresponding to said selection operation, said at least part of items of said second item group associated with the selected item.

13. The information processing terminal as set forth in any one of claims 7 to 12,
wherein said control means scrolls the string of the items of said second item group displayed on said display corresponding to an operation for said display so as to change items on said display.

14. The information processing terminal as set forth in any one of claims 7 to 13,
wherein the items of said second item group are characters, and
wherein when a selection operation is performed for a character of said second item group, said control means displays the character corresponding to the selection operation in a character input region and displays words associated with the character displayed in said character input region as selection candidates.

15. The information processing terminal as set forth in claim 14,
wherein said control means displays said selection candidates in said fan-shaped region or in the neighborhood thereof.

16. The information processing terminal as set forth in claim 14 or 15,
wherein said control means displays said selection candidates at positions and in sizes based on their priorities.

17. The Information processing terminal as set forth in claim 14,
wherein said control means displays said selection candidates in the neighborhood of said character input region.

18. The information processing terminal as set forth in claim 17,
wherein said control means controls said selection candidates corresponding to an operation for a lower portion opposite to said fan-shaped region of said display.

19. The information processing terminal as set forth in claim 18,
wherein an operation that selects one of said selection candidates is a flick operation or a drag operation.

20. The information processing terminal as set forth in claim 18 or 19,
wherein an operation that selects one of said selection candidates is a tap operation.

21. The information processing terminal as set forth in any one of claims 14 to 16,
wherein there are a plurality of said character input regions, and
wherein an operation that selects one of said selection candidates is a flick operation or a drag operation performed from one of said selection candidates to a desired character input region.

22. The information processing terminal as set forth in any one of claims 14 to 16,
wherein there are a plurality of displays, and
wherein an operation that selects one of said selection candidates is a flick operation or a drag operation performed from one of said selection candidates to a display that displays a character input region.

23. The information processing terminal as set forth in any one of claims 14 to 22,
wherein said selection candidates are words that start with a character displayed in said character input region.

24. The information processing terminal as set forth in any one of claims 1 to 23,
wherein said control means sets said fan-shaped region based on a position at which said display and input section detects an operation on said display in a predetermined state.

25. An operation control method for an information processing terminal having a display that displays an image, comprising:
arranging a plurality of items included in a first item group in a string and displaying part of the string in a predetermined fan-shaped region at a lower portion of said display; and
scrolling said string corresponding to a user's operation and changing items displayed on said display.
